(19) Europäisches Patentamt
European Patent Office
Office européen des brevets

(11) Veröffentlichungsnummer: **0 062 813**
**B1**

(12) # EUROPÄISCHE PATENTSCHRIFT

(45) Veröffentlichungstag der Patentschrift: **16.08.89**

(51) Int. Cl.⁴: **C 08 L 27/06**, C 08 K 5/00

(21) Anmeldenummer: **82102556.6**

(22) Anmeldetag: **26.03.82**

(54) **Stabilisiertes Polyvinylchlorid-Formmassen.**

(30) Priorität: **03.04.81 DE 3113442**

(43) Veröffentlichungstag der Anmeldung:
**20.10.82 Patentblatt 82/42**

(45) Bekanntmachung des Hinweises auf die Patenterteilung:
**16.08.89 Patentblatt 89/33**

(84) Benannte Vertragsstaaten:
**AT BE CH DE FR GB IT LI LU NL SE**

(56) Entgegenhaltungen:
**EP-A- 0 005 678**
**DE-A- 2 233 743**
**FR-A- 2 356 695**

**Die Akte enthält technische Angaben, die nach dem Eingang der Anmeldung eingereicht wurden und die nicht in dieser Patentschrift enthalten sind.**

(73) Patentinhaber: **Henkel Kommanditgesellschaft auf Aktien, Postfach 1100 Henkelstrasse 67, D-4000 Düsseldorf-Holthausen (DE)**

(72) Erfinder: **Erwied, Werner, Dr., Senliser Strasse 22, D-4018 Langenfeld (DE)**
Erfinder: **Wegemund, Bernd, Dr., Händelweg 3, D-5657 Haan (DE)**
Erfinder: **Wedl, Peter, Brookstrasse 10, D-2854 Loxstedt-Bexhövede (DE)**
Erfinder: **Worschech, Kurt, Dr., Alte Strasse 4, D-2854 Loxstedt (DE)**

**EP 0 062 813 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die Erfindung betrifft die Stabilisierung von Polyvinylchlorid-Formmassen, wobei dieser Begriff gebräuchliche Homopolymerisate oder Copolymerisate von Vinylchlorid sowie Abmischungen solcher Polyvinylchloridverbindungen mit anderen Polymermassen erfaßt.

In der Praxis werden als Stabilisatoren für PVC-Massen überwiegend Blei-, Zinn- oder Barium-/Cadmium-Verbindungen als Primärstabilisatoren, üblicherweise in Abmischung mit Costabilisatoren (Sekundärstabilisatoren), Gleitmitteln und weiteren üblichen Zusätzen, eingesetzt. Seit längerem wird versucht, die Schwermetall-Primärstabilisatoren durch toxikologisch weniger bedenkliche Komponenten zu ersetzen. Es ist bekannt, an ihrer Stelle Seifen von Alkali- und/oder Erdalkalimetallen beziehungsweise Zink zu verwenden. Dabei werden vorzugsweise Systeme auf Basis von Calciumseifen eingesetzt, die durch verschiedenartigste Costabilisatoren ergänzt werden.

Der stabilisierende Effekt solcher Leichtmetallseifensysteme ist gegenüber dem der Schwermetallverbindungen vergleichsweise gering. Formgegenstände, die unter Verwendung eines solchen Stabilisatorsystems hergestellt worden sind, zeigen häufig dunkle Verfärbungen und besitzen eine geringe Reststabilität.

In der DE-OS 2 642 509 wird eine Stabilisatorkombination beschrieben, die neben Calcium- und/oder Zinkseifen (insbesondere die Stearate) einen Partialester des Pentaerythrits mit einer $C_{12}$ bis $C_{22}$-Fettsäure, einen wachsartigen Kohlenwasserstoff und/oder eine freie $C_{12}$ bis $C_{22}$-Fettsäure sowie ein Antioxidationsmittel enthält. Die erwünschte Gleichwirkung mit Stabilisatorsystemen auf Basis von Schwermetallverbindungen wird noch nicht erreicht.

Die US-PS 4 000 100 beschreibt die Verwendung von sogenanntem nichtaktiviertem Zeolith A in Stabilisatorsystemen für Harzmassen auf PVC-Basis. Der Lehre dieser Druckschrift liegt die Erkenntnis zugrunde, daß durch die Einarbeitung bestimmter wasserhaltiger Zeolith-Typen in Stabilisatorsysteme synergistische Wirkungssteigerungen bezüglich Wärme- und Lichtschutz erzielt werden können. Die hierfür vorgeschlagenen Zeolithe umfassen die Typen 3A, 4A und 5A. Sie sollen in Verbindung mit beliebigen anorganischen, organometallischen oder organischen Stabilisatoren beziehungsweise Stabilisatorkomponenten zum Einsatz kommen.

Gegenstand der älteren europäischen Patentanmeldung 80 106 035 ist die Stabilisierung von PVC-Formmassen mittels eines komplexen Systems von Primär- und Sekundär-Stabilisatoren für PVC zusammen mit einem feinteiligen kristallinen synthetischen wasserhaltigen Natriumalumosilikat. Im einzelnen wird vorgeschlagen, den PVC-Formmassen – jeweils auf 100 Teile Polyvinylchlorid – die folgenden Komponenten zuzusetzen:

a) 0,2 bis 5 Gewichtsteile eines synthetischen, kristallinen, 13 bis 25 Gewichtsprozent gebundenes Wasser enthaltenden, feinteiligen Natriumalumosilikats, das – bezogen auf die wasserfreie Form – die Zusammensetzung 0,7 bis 1,1 $Na_2O \cdot Al_2O_3 \cdot 1{,}3$ bis 2,4 $SiO_2$ hat,

b) 0,05 bis 1,5 Gewichtsteile Calciumsalz von Fettsäuren mit 8 bis 22 Kohlenstoffatomen,

c) 0,05 bis 0,5 Gewichtsteile Zinksalz von Fettsäuren mit 8 bis 22 Kohlenstoffatomen,

d) 0,2 bis 2,0 Gewichtsteile Partialester aus Fettsäuren mit 8 bis 22 Kohlenstoffatomen und Polyolen mit 2 bis 6 Kohlenstoffatomen und 2 bis 6 Hydroxylgruppen, die pro Molekül im Durchschnitt mindestens eine freie Polyol-Hydroxylgruppe enthalten, sowie

e) 0,1 bis 10 Gewichtsteile Thioglykolsäureester von Polyolen mit 2 bis 6 Hydroxylgruppen und/oder Thioglykolsäureester monofunktioneller Alkohole mit 8 bis 22 Kohlenstoffatomen.

Die Verarbeitungseigenschaften derart stabilisierter PVC-Formmassen sind mit den Eigenschaften der Schwermetall-stabilisierten PVC-Formmassen durchaus vergleichbar. Dies gilt insbesondere für die Anfangsfarbe, die Anfangsstabilität und die Reststabilität der Formmassen.

Für gewisse Anwendungszwecke – beispielsweise für Verpackungsmaterialien auf dem Nahrungsmittelsektor – kann allerdings die schwefelhaltige Mischungskomponente e – der Thioglykolsäureester – Schwierigkeiten mit sich bringen. Da er in dem Stabilisatorsystem der genannten älteren europäischen Patentanmeldung eine wesentliche funktionelle Rolle spielt, kann für solche Anwendungsgebiete nicht einfach unter Auslassung der schwefelhaltigen Komponente gearbeitet werden.

Aufgabe der Erfindung war, ein Stabilisatorsystem zu finden, das in seiner Wirkung dem System der genannten älteren europäischen Patentanmeldung vergleichbar ist, dabei jedoch frei von den Thioglykolsäureestern monofunktioneller oder polyfunktioneller Alkohole aufgebaut sein kann. Die erfindungsgemäße technische Lösung dieser Aufgabe geht von der überraschenden Feststellung aus, daß bei gemeinsamer Anwendung eines feinteiligen, kristallinen, gebundenes Wasser enthaltenden Alumosilikats und bestimmt ausgewählten, an sich bekannten schwefelfreien Costabilisatoren im System der nichttoxischen Alkali-, Erdalkali- und/oder Zinkseifen mindestens gleich gute Stabilisierungsergebnisse erzielt werden können, wie sie die Lehre der genannten älteren europäischen Patentanmeldung ermöglicht.

Gegenstand der Erfindung sind dementsprechend stabilisierte PVC-Formmassen gemäß Anspruch 1.

Die genannte ältere europäische Patentanmeldung 80 106 035 beschreibt in ihrem Anspruch 9 Formmassen, die für die Herstellung von Folien im Kalanderwalzverfahren bestimmt sind. Die Materialien enthalten zusätzlich zu den eingangs genannten Komponenten a bis e auf 100 Gewichtsteile Polyvinylchlorid 0,5 bis 5 Gewichtsteile epoxidiertes Sojaöl, 0,1 bis 1 Gewichtsteile hochmolekulares Esterwachs und 0,2 bis 0,5 Gewichtsteile

α-Phenylindol oder Benzoylstearoylmethan. Auch hier wird also schon eine β-Diketonverbindung mit verwendet, allerdings stets in Gegenwart des Thioglykolsäureesters gemäß e und noch dazu in einer bestimmten Abmischung mit epoxidiertem Sojaöl und einem höhermolekularem Esterwachs. Von diesem Vorschlag weicht die erfindungsgemäße Lehre insbesondere durch Auslassung der bisher als essentiell angesehenen Komponente e ab. In der bevorzugten Ausführungsform der Erfindung werden dabei keinerlei Costabilisatoren eingesetzt, die organische Thioverbindungen enthalten. Bekannt ist ja beispielsweise, daß auch andere Thioverbindungen costabilisierende Wirkung aufweisen können, siehe hierzu beispielsweise die β-Thioketoester der europäischen Patentanmeldung 0 004 826.

In der folgenden Erfindungsbeschreibung sind die Einzelheiten zu den Komponenten der erfindungsgemäßen PVC-Formmassen beziehungsweise der in PVC-Formmassen einzusetzenden Stabilisatorsysteme gemäß der Erfindung geschildert.

PVC-Massen

Die Erfindung ist zur Stabilisierung von Homopolymerisaten oder Mischpolymerisaten des Vinylchlorids geeignet. Die Mischpolymerisate enthalten vorzugsweise wenigstens 50 Molprozent, insbesondere wenigstens 80 Molprozent, an Vinylchlorid. Die Polymerisate können auf beliebigem Wege, also beispielsweise durch Suspensions-, Emulsions- oder Blockpolymerisation hergestellt worden sein. Ihr K-Wert kann beispielsweise zwischen etwa 35 und 80 liegen. In den Rahmen der Erfindung fällt die Stabilisierung von Harzgemischen, die überwiegend solche Polymerisate beziehungsweise Copolymerisate auf Vinylchloridbasis enthalten. Übliche Formmassen auf PVC-Basis, vor allem zur Herstellung von Rohren und Profilen im Extrusionsverfahren, zur Herstellung von Verpackungshohlkörpern und zur Herstellung von gewalzten Folien sind für die Zwecke der Erfindung geeignet. Der Begriff Polyvinylchlorid-Formmassen erfaßt erfindungsgemäß sowohl die zur Verformung einzusetzenden Halbfertigprodukte als auch beliebig geformte Artikel aus diesen Massen.

Die Metallseifen als Primärstabilisatoren

In Betracht kommen sowohl Alkalimetallverbindungen als auch Erdalkalimetallverbindungen und/oder entsprechende Zinkverbindungen. Aus dem Gebiet der Alkalimetallverbindungen kann Kaliumseifen eine besondere Bedeutung zukommen. Die wichtigsten Metallseifen sind die entsprechenden Erdalkalimetallverbindungen und/oder Zinkverbindungen. Besondere Bedeutung kann Primärstabilisatoren auf der Basis von Calcium, Zink und/oder Barium zukommen. Bevorzugt werden Kombinationen von wenigstens zwei Salzen beziehungsweise Seifen eingesetzt. Besonders bedeutungsvoll ist die Kombination von Calcium-/Zink-Seifen. Aber auch der Kombination von Barium-/Zink-Verbindungen kommt größere Bedeutung zu.

Bedeutungsvoll sind insbesondere Salze der entsprechenden Metalle mit gesättigten oder ungesättigten aliphatischen Carbonsäuren mit bis 22 C-Atomen insbesondere Salze von Fettsäuren mit 8 bis 22 Kohlenstoffatomen. Für die Herstellung von Lebensmittelverpackungen oder Flaschen eignen sich besonders gut die entsprechenden Salze von langkettigen Säuren, die ungiftig sind und als Schmiermittel wirken. Beispiele für bevorzugte fettsaure Calcium- und Zinksalze leiten sich von Fettsäuren wie Capryl-, Caprin-, Laurin-, Myristin-, Palmitin- und Stearinsäure ab. Zum Einsatz kommen sowohl Salze einzelner Fettsäuren als auch Salze von Fettsäuregemischen, wie sie besonders aus natürlichen Fetten und Ölen gewonnen werden können. Bevorzugt eingesetzt werden die Calcium- und Zinksalze der Palmitin- und der Stearinsäure.

Die üblichen Zusatzmengen für diese Stabilisatoren betragen 0,1 bis 5 Gewichtsteile, bezogen auf 100 Gewichtsteile der Polymermasse. Werden Mischungen von Calcium- und Zinksalzen eingesetzt, so können in einer zweckmäßigen Ausführungsform – wieder bezogen auf 100 Gewichtsteile des Polyvinylchlorids – 1 bis 30 Gewichtsteile Calciumsalz auf 1 bis 10 Gewichtsteile Zinksalz vorgesehen sein. Gegebenenfalls vorliegende Bariumverbindungen können insbesondere auch als Alkylphenolate zum Einsatz kommen.

Feinteiliges, kristallines, wasserhaltiges Alumosilikat

Bei den synthetischen kristallinen Alumosilikaten der im Anspruch 1 genannten allgemeinen Formel handelt es sich um an sich bekannte Zeolithe vom Typ NaA, die einen durchschnittlichen wirksamen Porendurchmesser von 4 Å besitzen, weshalb sie auch als Zeolithe 4A bezeichnet werden. Derartige Natriumalumosilikate können nach bekannten Methoden hergestellt werden.

Geeignete Syntheseverfahren sind u.a. in der DE-OS 2 412 837 beschrieben. Weitere Einzelheiten zur Beschaffenheit und Herstellung dieser Natrium-Alumosilikate sind beispielsweise den folgenden Literaturstellen zu entnehmen: DE-OS 2 651 485, DE-OS 2 651 445, DE-OS 2 651 436, DE-OS 2 651 419, DE-OS 2 651 420, DE-OS 2 651 437, US-PS 3 112 176.

Bei der Herstellung können durch Ausfällung entstandene amorphe, feinverteilte Natriumalumosilikate durch Erhitzen auf 50 bis 200 °C in den kristallinen Zustand überführt werden. Danach wird das kristalline Natriumalumosilikat durch Filtration von der verbleibenden wäßrigen Lösung abgetrennt und in der Regel bei 50 bis 200 °C getrocknet, bis es einen Wassergehalt von 13 bis 25 Gewichtsprozent aufweist. Die zum Beispiel in der DE-OS 2 412 837 beschriebenen und erfindungsgemäß eingesetzten kristallinen Produkte weisen insbesondere eine Teilchengröße im Bereich von 0,1 bis 50 µm auf. Für die Durchführung des erfindungsgemäßen Verfahrens werden bevorzugt Natriumalumosilikate mit einer Teilchengröße von 0,1 bis 20 µm eingesetzt. Das bei 22 °C bestimmte Calciumbindevermögen der Natriumalumosilikate beträgt wenigstens 50 mg CaO/g wasserfreier Aktivsubstanz und kann Werte von etwa 200 mg CaO/g Aktivsubstanz erreichen. Bevorzugt liegt dieses Calciumbindevermögen im Bereich von 100–200 mg CaO/g Aktivsubstanz und dabei üblicherweise im Bereich oberhalb 150 mg CaO/g. Einzelheiten zur Bestimmung des Calciumbindevermögens sind der zitierten DE-OS 2 412 837 sowie den nachfolgenden Angaben zur Herstellung geeigneter Natriumalumosilikate zu entnehmen. Besonders bevorzugt sind Kristalline Natriumalumosilikate, deren Teilchengröße wenigstens weitaus überwiegend im Bereich von 1–10 µm liegt.

In einer bevorzugten Ausführung der Erfindung können auch Natriumalumosilikate mit abgerundeten Ecken und Kanten verwendet werden. Zur Herstellung solcher Zeolithe geht man mit Vorteil von einem Ansatz aus, dessen molare Zusammensetzung im Bereich

$$2{,}5\text{–}6{,}0\ Na_2O \cdot Al_2O_3 \cdot 0{,}5\text{–}5{,}0\ SiO_2 \cdot 60\text{–}200\ H_2O$$

liegt. Dieser Ansatz wird in üblicher Weise zur Kristallisation gebracht. Dies geschieht vorteilhafterweise dadurch, daß man den Ansatz wenigstens ½ Stunde lang auf 70–120 °C, vorzugsweise auf 80–95 °C unter Rühren erwärmt. Das kristalline Produkt wird auf einfache Weise durch Abtrennen der flüssigen Phase isoliert, gegebenenfalls mit Wasser nachgewaschen und dann getrocknet.

Im Rahmen der Erfindung lassen sich auch solche feinteiligen wasserunlöslichen Natriumalumosilikate verwenden, die in Gegenwart von wasserlöslichen anorganischen oder organischen Dispergiermitteln gefällt und kristallisiert wurden. Als wasserlösliche organische Dispergiermittel eignen sich Tenside, nichttensidartige aromatische Sulfonsäuren und Verbindungen mit Komplexbildungsvermögen gegenüber Calcium. Die genannten Dispergiermittel können in beliebiger Weise vor oder während der Fällung in das Reaktionsgemisch eingebracht werden; sie können zum Beispiel als Lösung vorgelegt oder in der Aluminat- und/oder Silikatlösung aufgelöst werden. Die Menge des Dispergiermittels sollte wenigstens 0,05 Gewichtsprozent, vorzugsweise 0,1–5 Gewichtsprozent, bezogen auf den gesamten Fällungsansatz, betragen. Zum Kristallisieren wird das Fällungsprodukt ½ bis 24 Stunden auf 50 bis 200 °C erhitzt. Aus der Vielzahl brauchbarer Dispergiermittel sind als Beispiele Natriumlaurylethersulfat, Natriumpolyacrylat und Natriumsalze der 1-Hydroxyethan-1,1-diphosphonsäure zu nennen.

Die erfindungsgemäß geeigneten Natriumalumosilikate des Typs NaA enthalten 13 bis 25 Gewichtsprozent gebundenes Wasser; bevorzugt werden solche Produkte eingesetzt, deren Wassergehalt im Bereich von 18 bis 25 Gewichtsprozent liegt.

Bestimmte Co-Stabilisatoren im Sinne der Erfindung

Bei den erfindungsgemäß als Komponente b) zusammen mit den Alumosilikaten gemäß a) eingesetzten bestimmten Co-Stabilisatoren handelt es sich um eine an sich bekannte Verbindungsklasse. Ihre Verwendung bei der Stabilisierung von PVC-Formmassen ist Gegenstand mehrerer Vorveröffentlichungen.

β-Diketone:

Zur Beschreibung dieser Stoffklasse wird verwiesen auf DE-AS 2 600 516, DE-AS 2 728 862 und DE-AS 2 728 865. Die β-Diketone sind organische Verbindungen der allgemeinen Formel

$$R_1\text{–CO–CHR}_2\text{–CO–}R_3,$$

in der $R_1$ und $R_3$ gleich oder verschieden sein können und jeweils für eine geradkettige oder verzweigte Alkyl- oder Alkenylgruppe mit bis zu 36 Kohlenstoffatomen, eine Aralkylgruppe mit 7 bis 36 Kohlenstoffatomen, eine Arylgruppe oder cycloaliphatische Gruppe mit weniger als 14 Kohlenstoffatomen stehen, wobei die cycloaliphatischen Gruppen gegebenenfalls Kohlenstoff-Kohlenstoff-Doppelbindungen enthalten. Gegebenenfalls sind diese Gruppen substituiert mit Halogenatomen oder im Falle der Aryl- oder cycloaliphatischen Gruppen mit Methyl- oder Ethylgruppen. Sie können weiterhin modifiziert sein durch die Anwesenheit von einer oder mehrerer Gruppierungen

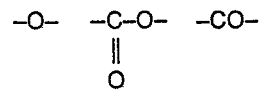

in der aliphatischen Kette. Außerdem können die Reste zusammen eine zweiwertige Alkylengruppe mit zwei bis fünf Kohlenstoffatomen bilden, die gegebenenfalls ein Sauerstoff- oder Stickstoffatom aufweist. $R_2$ bedeutet Wasserstoff oder eine Alkyl- oder Alkenylgruppe mit bis zu 36 Kohlenstoffatomen, die Gruppierungen

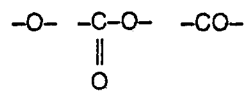

enthalten kann, oder auch eine Gruppe der Formel

$$\text{–CO–}R_4,$$

wobei $R_4$ eine Alkylgruppe mit 1 bis 36 Kohlenstoffatomen oder eine Arylgruppe ist, oder eine Gruppe der allgemeinen Formel

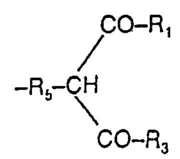

in der $R_5$ für eine Alkylengruppe mit 1 bis 6 Kohlenstoffatomen steht. Einer der Substituenten $R_1$

oder $R_3$ kann auch für Wasserstoff stehen $R_1$ und $R_2$ können zusammen eine zweiwertige Gruppe der folgenden Art bedeuten: Aralkylengruppe mit 7 bis 36 Kohlenstoffatomen, Arylen- oder Cycloalkylengruppe mit weniger als 14 Kohlenstoffatomen, wobei die cycloaliphatischen Gruppen gegebenenfalls Kohlenstoff-Kohlenstoff-Doppelbindungen enthalten. Diese Gruppen können gegebenenfalls substituiert sein. Beispiele für geeignete Substituenten sind Halogen oder im Falle von Arylgruppen oder cycloaliphatischen Gruppen Methyl- oder Ethylreste. Die Gruppen können auch dadurch modifiziert sein, daß in der aliphatischen Kette eine oder mehrere Gruppierungen

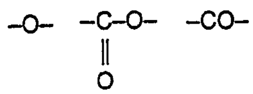

vorliegen.

β-Diketoverbindungen der genannten Art können als bestimmte einzelne Verbindungen oder im Gemisch mehrerer Verbindungen eingesetzt werden. Besondere Bedeutung kommt solchen β-Diketonen zu, die als mit zwei Säureresten substituierte Methanderivate ($R_2$ = H) gedeutet werden können. Eine im Rahmen der Erfindung besonders wichtige β-Diketonverbindung ist das Stearoyl-Benzoyl-Methan, es können aber auch vergleichbare Methanderivate mit den verschiedenartigsten Säureresten vorliegen. Weitere geeignete substituierende Säurereste leiten sich beispielsweise von der Laurinsäure, der Myristinsäure, der Palmitinsäure oder der Behensäure ab. Dabei können gleiche oder verschiedene der hier genannten Säurereste als Methan-Substituenten die β-Diketon-Verbindungen bilden.

Die erfindungsgemäß zusammen mit den Natriumalumosilikaten gemäß a) eingesetzten Co-Stabilisatoren gemäß b), d.h. die β-Diketone, können nach den in der zitierten Literatur angegebenen Verfahren gewonnen werden. Sie können in Form einzelner bestimmter Verbindungen oder als Mischungen mehrerer Verbindungen aus der genannten Stoffklasse eingesetzt werden.

Gegebenenfalls mit zu verwendende weitere Co-Stabilisatoren

Zusammen mit den als Primärstabilisatoren wirkenden Metallsalzen, den Alumosilikaten gemäß a) und den erfindungsgemäß ausgewählten bestimmten Co-Stabilisatoren gemäß b) können gewünschtenfalls weitere übliche Co-Stabilisatoren für PVC-Systeme zum Einsatz kommen.

Zur Literatur wird verwiesen auf L. I. Nass «Encyclopedia of PVC», Marcel Dekker Inc., New York–Basel, 1976/1977.

Verwiesen sei insbesondere auf Band I, Seiten 308/309.

Zur Gruppe der Co-Stabilisatoren und sich mit der Funktion dieser Komponenten überschneidend werden auch häufig die im folgenden geschilderten Gleitmittel gerechnet.

Gleitmittel

Die genannte ältere europäische Patentanmeldung 80 106 035 beschreibt Polyolpartialester als Komponente d), die besonders geeignete costabilisierende Gleitmittel im Sinne der Erfindung sein können. Es handelt sich hierbei um Partialester aus Fettsäuren mit 8 bis 22 Kohlenstoffatomen und Polyolen mit 2 bis 6 Kohlenstoffatomen und 2 bis 6 Hydroxylgruppen, die pro Molekül im Durchschnitt mindestens eine freie Polyol-Hydroxylgruppe enthalten. Sie werden in an sich bekannter Weise durch Veresterung von Polyolen mit 2 bis 6 Kohlenstoffatomen und 2 bis 6 Hydroxylgruppen mit Fettsäuren einer Kettenlänge von 8 bis 22 Kohlenstoffatomen hergestellt, wobei übliche Veresterungskatalysatoren mitverwendet werden können. Polyol und Fettsäure werden dabei im Molverhältnis 1:1 bis 1:(n−1) miteinander umgesetzt, wobei n die Anzahl der Hydroxylgruppen des Polyols bedeutet. Vorzugsweise setzt man die Reaktionsteilnehmer in solchen Mengen ein, daß sich Partialester mit einer OH-Zahl zwischen 140 und 580, insbesondere zwischen 170 und 540 bilden. Das Reaktionsprodukt, das jeweils ein Gemisch verschiedener Ester darstellt, soll eine Säurezahl haben, die unter 15, insbesondere unter 8 liegt. Geeignete Polyolkomponenten sind Ethylenglykol, Propylenglykol-1,2, Propylenglykol-1,3, Butylenglykol-1,2, Butylenglykol-1,4, Hexandiol-1,6, Neopentylglykol, Glycerin, Trimethylolethan, Trimethylolpropan, Pentaerythrit, Dipentaerythrit, Erythrit, Mannit und Sorbit. Besonders wichtige Polyolkomponenten besitzen 3–6 Hydroxylgruppen und vorzugsweise 3 oder 4 Hydroxylgruppen. Glycerin und Pentaerythrit können im hier erörterten Zusammenhang im Rahmen der Erfindung mit besonderem Vorteil Verwendung finden. Als geeignete Fettsäurekomponenten seien beispielsweise Capryl-, Caprin-, Laurin-, Myristin-, Palmitin-, Stearin- und Behensäure genannt. Es können auch synthetische Fettsäuren der erwähnten Kettenlänge, wie Montansäuren, oder ungesättigte Säuren, wie Ölsäure und Linolensäure, oder auch substituierte Fettsäuren, insbesondere hydroxylierte Säuren wie 12-Hydroxystearinsäure eingesetzt werden. Aus praktischen Gründen werden zumeist Gemische von Fettsäuren verwendet, wie sie aus natürlichen Fetten und Ölen gewonnen werden. Diese Komponente kann auch aus einem Gemisch der vorgenannten Partialester bestehen. Partialester aus Polyolen mit 3 bis 6 Hydroxylgruppen, vorzugsweise 3 oder 4 Hydroxylgruppen und den genannten Fettsäuren, die im Schnitt 2 bis 3 freie Hydroxylgruppen enthalten, können besonders bevorzugte Gleitmittel im Sinne der Erfindung sein.

Weitere geeignete Gleitmittel sind die in der DE-AS 1 907 768 und den DE-OS 2 262 266 und 2 306 744 beschriebenen Komplexester bzw. Komplexestergemische.

Die DE-AS 1 907 768 schildert Mischester mit Hydroxyl- bzw. Säurezahlen von 0 bis 6 aus

a) aliphatischen, cycloaliphatischen und/oder aromatischen Dicarbonsäuren,

b) aliphatischen Polyolen und

c) aliphatischen Monocarbonsäuren mit 12 bis 30 Kohlenstoffatomen im Molekül.

Bevorzugt enthält der unter b) genannte Stoff 2 bis 6 Hydroxylgruppen im Molekül und der unter a) genannte Ausgangsstoff 2 bis 22 Kohlenstoffatome im Molekül.

Die bevorzugten Mischester enthalten die Komponenten a), b) und c) in einem Molverhältnis von etwa

$$(n-1):n:nm-2(n-1),$$

wobei n eine ganze Zahl von 2 bis 11 und m die Funktionalität des Polyols darstellen. Geeignet sind insbesondere Mischester, die als Komponente a) Adipinsäure, als Komponente b) Pentaerythrit und als Komponente c) Stearinsäure oder Ölsäure enthalten.

Weitere Angaben zu geeigneten Gleitmitteln finden sich in den genannten DE-OSen 2 262 266 und 2 306 744.

Als Gleitmittel kommen weiterhin Wachsester in Betracht, d.h. Ester aus längerkettigen Monocarbonsäuren und Monoalkoholen. Bevorzugt liegt die Summe der Kohlenstoffatome dieser Ester im Bereich von 28–70, insbesondere im Bereich von 30–50. Besonders wichtige Komponenten sowohl auf der Alkohol- wie auf der Carbonsäure-Seite sind die entsprechenden Verbindungen mit 18 bis 22 C-Atomen.

Weitere geeignete bekannte Gleitmittel sind Carbonsäuren wie Stearinsäure, Montanwachse, primäre und sekundäre gesättigte und ungesättigte höhere Alkohole mit insbesondere 16 bis 44 C-Atomen im Molekül, oxidiertes Polyethylen und weiter Komponenten wie sie beispielsweise in L.I. Nass «Encyclopedia of PVC» a.a.O. Band II, Seiten 644ff., insbesondere S. 651 aufgezählt sind.

Weitere übliche Bestandteile

Über die genannten Komponenten hinaus können je nach Anwendungszweck weitere übliche Zusätze vorliegen. In Hart-Polymerisaten können Zusatzstoffe zur Verbesserung der Schlagfestigkeit, Pigmente und/oder Füllstoffe vorgesehen sein. Weich-Polymerisate können einen oder mehrere Weichmacher bzw. Plastifiziermittel, anorganische oder organische Pigmente und/oder Füllstoffe enthalten. Allgemein können Antioxidantien und UV-Stabilisatoren zugemischt sein.

Aus dem Gebiet der Antioxidantien können besondere Bedeutung haben sterisch gehinderte Phenole von der Art der 2,6-disubstituierten Phenolverbindungen. Die in 2- und 6-Stellung vorliegenden Substituenten können insbesondere raumerfüllende Gruppen wie tert.-Alkylgruppen, insbesondere die tert.-Butylgruppe sein. Die Phenolverbindungen weisen häufig zusätzlich in 4-Stellung einen Alkylsubstituenten, insbesondere den Methylsubstituenten auf. Ein besonders geeignetes substituiertes Phenol ist das 2,6-Di-tert.-butyl-4-methyl-phenol.

Die an sich bekannten Zusatzstoffe können in üblichen Mengen, z.B. in Mengen von 0,1 bis 20 Gewichtsteile/100 Gewichtsteile PVC-Harzmasse zum Einsatz kommen.

In einer bevorzugten Ausführungsform der Erfindung werden β-Diketone gemäß b) zusammen mit epoxidiertem Sojaöl eingesetzt. In diesem Fall kann es zweckmäßig sein, auf jeweils 100 Gewichtsteile des Polyvinylchlorids 0,2 bis 1 Gewichtsteil, vorzugsweise 0,2 bis 0,5 Gewichtsteile des β-Diketons und 0,5 bis 5 Gewichtsteile des epoxidierten Sojaöls zu verwenden. Bevorzugt wird in dieser Ausführungsform weiterhin ein hochmolekulares Esterwachs und/oder ein Partialester mitverwendet, so wie diese Komponenten zuvor bei den Gleitmitteln dargestellt sind. Die Menge dieser Komponente kann dabei bevorzugt 0,1 bis 2 Gewichtsteile, insbesondere 0,1 bis 1 Gewichtsteil je 100 Gewichtsteile PVC ausmachen.

Die einzelnen Komponenten der erfindungsgemäßen PVC-Formmassen können durch Vermischen der Bestandteile in konventionellen Mischern vereinigt werden. Es ist dabei möglich, zunächst die mehrfachen Komponenten des Stabilisatorgemisches zu vermischen und dieses Stabilisatorgemisch dann mit der PVC-Formmasse zu vereinigen.

Ein weiterer Gegenstand der Erfindung betrifft die Stabilisatorengemische als solche gemäß Anspruch 11, die zur anschließenden Vereinigung mit den PVC-Massen geeignet sind. Hierzu gelten die folgenden Angaben:

Die Grundkomponenten Alumosilikat, erfindungsgemäß ausgewählter Co-Stabilisator und Leichtmetallseife liegen in den folgenden Mischungsverhältnissen vor:

4–100 Gewichtsteile synthetisches, kristallines, 13–25 Gewichtsprozent gebundenes Wasser enthaltendes, feinteiliges Alumosilikat der eingangs angegebenen Zusammensetzung,
1–50 Gewichtsteile wenigstens eines an sich bekannten Co-Stabilisators aus der Klasse der β-Diketone,
1–150 Gewichtsteile Calciumseifen,
1–100 Gewichtsteile Zinkseifen.

Die bevorzugten an sich bekannten Co-Stabilisatoren sind insbesondere Diacyl-methanverbindungen. Auch bezüglich der weiteren Komponenten gelten die zuvor gemachten näheren Definitionen.

Bevorzugt enthalten die Stabilisatoren Gemische der Erfindung wenigstens ein Gleitmittel aus der Klasse der Partialester aus Fettsäuren mit 8 bis 22 Kohlenstoffatomen und Polyolen mit 2 bis 6 Kohlenstoffatomen und 2 bis 6 Hydroxylgruppen, die pro Molekül im Durchschnitt mindestens eine freie Polyol-Hydroxylgruppe enthalten, können besonders bevorzugt sein. Das Gleitmittel liegt im Stabilisatorgemisch zweckmäßigerweise in Mengen von 4–100 Gewichtsteilen vor.

In einer weiterhin bevorzugten Ausführungsform enthalten die Stabilisatoren Gemische der Erfindung zusätzlich epoxidiertes Sojaöl zweckmäßig in Mengen von 1–300 Gewichtsteilen. Schließlich kann die Mitverwendung von sterisch

gehinderten Phenolen in einer Menge von 1–20 Gewichtsteilen in den erfindungsgemäßen Stabilisatorengemischen vorteilhaft sein.

Die erfindungsgemäßen Stabilisatormischungen können durch einfaches mechanisches Vermischen der Bestandteile in konventionellen Mischern erhalten werden. Bei der Herstellung fallen sie im allgemeinen als rieselfähige, nichtstaubende Produkte an.

Beispiele

Beispiel 1

100 Gewichtsteile Suspensions-PVC (K-Wert 70) werden vermischt mit den folgenden Komponenten:

0,8 Gewichtsteile (GT) Calciumstearat,
0,4 Gewichtsteile (GT) Zinkstearat,
0,1 Gewichtsteile (GT) Sorbit,
0,5 Gewichtsteile (GT) Stearoylbenzoylmethan,
3,0 Gewichtsteile (GT) epoxidiertes Sojaöl,
1,0 Gewichtsteile (GT) Fettalkohole,
0,7 Gewichtsteile (GT) Montanwachs und
0,5 Gewichtsteile (GT) Zeolith Na A.

Die Wirkung der Stabilisatorkombination wird in diesem Fall und in den folgenden Beispielen an Hand der «statischen Thermostabilität» von Walzfellen geprüft. Zu diesem Zweck werden Stabilisatorgemische enthaltende Polyvinylchloridformmassen auf einem Laborwalzwerk der Abmessung 450 × 220 mm (Fa. Berstorff) bei einer Walzentemperatur von 170 °C und einer Walzendrehzahl von 12,5 Upm im gleichlauf im Verlauf von 5 Minuten zu Prüffellen verarbeitet. Die circa 0,5 mm dicken Felle werden zu quadratischen Probestücken mit 10 mm Kantenlänge zerschnitten, die anschließend in einem Trockenschrank mit 6 rotierenden Horden (Heraeus FT 420 R) einer Temperatur von 180 °C ausgesetzt werden. Im Abstand von 15 Minuten werden Proben entnommen und deren Farbveränderung begutachtet.

In der nachfolgenden Beurteilung ist jeweils zunächst die Anfangsfarbe angegeben und dann die Zeit, nach der der Test wegen zu starker Verfärbung (Stabilitätsabbruch) beendet wurde.

Für das eingangs genannte Stoffgemisch ist die Anfangsfarbe «fast farblos»; der Stabilitätsabbruch erfolgt nach 140 Min.

Beispiel 2

Es wird die folgende Abmischung hergestellt:

100 GT Suspensions-PVC (K-Wert 70)
1,0 GT Calciumstearat
0,5 GT Zinkstearat
0,2 GT Stearinsäure
0,2 GT Paraffinwachs
0,5 GT Pentaerythritpartialester der Stearinsäure.

Die Stabilität dieser als «Nullprobe» bezeichneten Mischung wird, wie im Beispiel 1 beschrieben, bestimmt. In anschließenden Versuchen werden der Nullprobe weitere Stabilisatorzusätze beigegeben. Die folgende Tabelle enthält die dabei erhaltenen Ergebnisse.

| | | | Anfangsfarbe | Stabilitätsende (min) |
|---|---|---|---|---|
| Nullprobe | | | hellrosa | 40 |
| 1 | GT | Stearoylbenzoylmethan | fast farblos | 40 |
| 0,5 | GT | Zeolith Na A | hellrosa | 60 |
| 1 | GT | Zeolith Na A | hellrosa | 70 |
| 0,5 | GT | Stearoylbenzoylmethan + | fast farblos | 60–70 |
| 0,5 | GT | Zeolith Na A | | |

Beispiel 3

100 GT S-PVC (K-Wert 70)
0,5 GT Ca-Stearat

Die Stabilität dieser «Nullprobe» und ihrer Abmischungen mit weiteren Komponenten zeigt folgende Tabelle.

| | | | Anfangsfarbe | Stabilitätsabbruch (min) |
|---|---|---|---|---|
| Nullprobe | | | rosa | 10 |
| 0,3 | GT | Benzoyl-isooctanoyl-methan | rosa | 10 |
| 0,5 | GT | hochmolekulares Esterwachs (Gleitmittel) | rosa | 10 |
| 0,3 | GT | Benzoyl-isooctanoyl-methan | | |
| 0,5 | GT | hochmolekulares Esterwachs (Gleitmittel) | hellgelb | 30 |
| 0,3 | GT | Zn-stearat | | |
| 0,3 | GT | Zn-stearat | fast farblos | 30 |
| 0,3 | GT | Benzoyl-isooctanoyl-methan | | |
| 0,5 | GT | hochmolekulares Esterwachs (Gleitmittel) | fast farblos | 30 |

| | | | Anfangs-farbe | Stabilitätsab-bruch (min) |
|---|---|---|---|---|
| 0,3 | GT | Zn-stearat | | |
| 0,3 | GT | Benzoyl-isooctanoyl-methan | | |
| 0,5 | GT | hochmolekulares Esterwachs (Gleitmittel) | fast farblos | 30–40 |
| 0,3 | GT | Zn-stearat | | |
| 1,3 | GT | Benzoyl-isooctanoyl-methan | | |
| 0,5 | GT | hochmolekulares Esterwachs (Gleitmittel) | fast farblos | 100 |
| 0,3 | GT | Zn-stearat | | |
| 0,3 | GT | Benzoyl-isooctanoyl-methan | | |
| 1,0 | GT | Na-Al-Silikat mit 19% $H_2O$ (Zeolith-Typ Na A) | | |
| 0,5 | GT | hochmolekulares Esterwachs (Gleitmittel) | fast farblos | 100 |
| 0,3 | GT | Zn-stearat | | |
| 0,3 | GT | Benzoyl-isooctanoyl-methan | | |
| 1,0 | GT | Na-Al-Silikat mit 19% $H_2O$ (Zeolith-Typ Na A) | | |
| 0,1 | GT | Pentaerythritpartialester der Stearinsäure | | |
| 0,5 | GT | hochmolekulares Esterwachs (Gleitmittel) | fast farblos | 120 |
| 0,3 | GT | Zn-stearat | | |
| 0,3 | GT | Benzoyl-isooctanoyl-methan | | |
| 1,0 | GT | Na-Al-Silikat mit 19% $H_2O$ (Zeolith-Typ Na A) | | |
| 1,0 | GT | Pentaerythritpartialester der Stearinsäure | | |
| 0,5 | GT | hochmolekulares Esterwachs (Gleitmittel) | fast farblos | 120 |
| 0,3 | GT | Zn-stearat | | |
| 0,3 | GT | Benzoyl-stearoyl-methan | | |
| 1,0 | GT | Na-Al-Silikat mit 19% $H_2O$ (Zeolith-Typ Na A) | | |
| 0,1 | GT | 2.6-Di-tert.-butyl-4-methyl-phenol | | |
| 0,5 | GT | hochmolekulares Esterwachs (Gleitmittel) | fast farblos | 140 |
| 0,3 | GT | Zn-stearat | | |
| 0,3 | GT | Benzoyl-isooctanoyl-methan | | |
| 1,0 | GT | Na-Al-Silikat mit 19% $H_2O$ (Zeolith-Typ Na A) | | |
| 0,1 | GT | 2.6-Di-tert.-butyl-4-methyl-phenol | | |
| 3,0 | GT | epoxidiertes Sojaöl | | |

**Patentansprüche**

1. Stabilisierte Polyvinylchlorid-Formmassen, enthaltend eine Stabilisatorkombination auf Basis Alkali-, Erdalkali- und/oder Zink-Seifen, Costabilisatoren, feinteiliges kristallines wasserhaltiges Alumosilikat, Gleitmittel sowie gewünschtenfalls weitere übliche Zusatzstoffe, dadurch gekennzeichnet, daß sie – bezogen auf 100 Gewichtsteile Polyvinylchlorid –

a) als Alumosilikat 0,2 bis 5 Gewichtsteile eines synthetischen, kristallinen, 13 bis 25 Gewichtsprozent gebundenes Wasser enthaltenden feinteiligen Natriumalumosilikats vom Typ NaA der – bestimmt als wasserfreie Form – Zusammensetzung 0,7 bis 1,1 $Me_2O \cdot Al_2O_3 \cdot$ 1,3 bis 2,4 $SiO_2$ (worin Me Natrium bedeutet)
und

b) als Costabilisator 0,1 bis 5 Gewichtsteile wenigstens eines an sich bekannten Costabilisators aus der Klasse der β-Diketone gegebenenfalls neben weiteren Costabilisatoren,
enthalten.

2. Stabilisierte PVC-Formmassen nach Anspruch 1, dadurch gekennzeichnet, daß sie die Metallseifen in Mengen von 0,1 bis 5 Gewichtsteilen auf 100 Gewichtsteile Polyvinylchlorid enthalten, wobei vorzugsweise die entsprechenden Salze höherer gesättigter oder ungesättigter Fettsäuren vorliegen.

3. Stabilisierte PVC-Formmassen nach Ansprüchen 1 und 2, dadurch gekennzeichnet, daß sie Fettsäureseifen von Calcium, Zink und/oder Barium enthalten, wobei das Barium auch als Alkylphenolat vorliegen kann.

4. Stabilisierte PVC-Formmassen nach Ansprüchen 1 bis 3, dadurch gekennzeichnet, daß sie das feinteilige kristalline wasserhaltige Alumosilikat in einer Teilchengröße von 0,1 bis 20 µm, vorzugsweise in einer Teilchengröße von etwa 1 bis 10 µm enthalten.

5. Stabilisierte PVC-Formmassen nach Ansprüchen 1 bis 4, dadurch gekennzeichnet, daß sie ein Natriumalumosilikat der angegebenen allgemeinen Formel mit einem Wassergehalt von 18 bis 25 Gewichtsprozent enthalten.

6. Stabilisierte PVC-Formmassen nach Ansprüchen 1 bis 5, dadurch gekennzeichnet, daß sie als Komponente b ein β-Diketon der allgemeinen Formel $R_1$–CO–$CHR_2$–CO–$R_3$ enthalten, in der $R_1$ und $R_3$ gleich oder verschieden sein können und jeweils für eine geradkettige oder verzweigte Alkyl- oder Alkenylgruppe mit bis zu 36 Kohlenstoffatomen, eine Aralkylgruppe mit 7 bis 36 Kohlenstoffatomen, eine Arylgruppe oder cycloaliphatische Gruppe mit weniger als 14 Kohlenstoffatomen stehen, wobei die cycloaliphatischen Gruppen gegebenenfalls auch olefinisch ungesättigt sein können und wobei weiterhin die genannten Reste $R_1$ und $R_3$ auch substituiert sein können, während $R_2$ Wasserstoff, ein Alkyl- oder Alkenylrest mit bis zu 36 C-Atomen ist und wobei weiterhin die Reste $R_1$ und $R_2$ auch zu einem Ring geschlossen sein können.

7. Stabilisierte PVC-Formmassen nach Ansprüchen 1 bis 6, dadurch gekennzeichnet, daß sie von organische Thioverbindungen enthaltenden Costabilisatoren frei sind.

8. Stabilisierte PVC-Formmassen nach Ansprüchen 1 bis 7, dadurch gekennzeichnet, daß sie die Komponente b zusammen mit 0,1 bis 5 Gewichtsteilen epoxidiertem Sojaöl – bezogen auf 100 Gewichtsteile Polyvinylchlorid – enthalten.

9. Stabilisierte PVC-Formmassen nach Ansprüchen 1 bis 8, dadurch gekennzeichnet, daß sie als Co-Stabilisator mit Gleitmitteleigenschaften 0,2 bis 2,0 Gewichtsteile Partialester aus Fettsäuren mit 8 bis 22 C-Atomen und Polyolen mit 2 bis 6 C-Atomen und 2 bis 6 Hydroxylgruppen enthalten, die pro Molekül im Durchschnitt mindestens eine freie Polyol-hydroxylgruppe aufweisen, und/oder daß als Gleitmittel ein Esterwachs aus vorzugsweise einwertigen längerkettigen Säuren und entsprechenden Alkoholen mit insgesamt 28 bis 70 C-Atomen, vorzugsweise 30 bis 50 C-Atomen vorliegt.

10. Stabilisierte PVC-Formmassen nach Ansprüchen 1 bis 9, dadurch gekennzeichnet, daß sie als Komponente b Diacyl-methan-verbindungen enthalten.

11. Stabilisatorkombination für Polyvinylchloridformmassen der Zusammensetzung

a) 4–100 Gewichtsteile synthetisches, kristallines, 13–25 Gewichtsprozent gebundenes Wasser enthaltendes, feinteiliges Natriumalumosilikat vom Typ NaA, das – bezogen auf die wasserfreie Form – die Zusammensetzung 0,7 bis 1,1 $Na_2O \cdot Al_2O_3 \cdot 1{,}3\text{–}2{,}4\ SiO_2$ hat,

b) 1–50 Gewichtsteile wenigstens eines an sich bekannten Co-Stabilisators aus der Klasse der β-Diketone,

c) 1–150 Gewichtsteile Calciumseifen,

d) 1–100 Gewichtsteile Zinkseifen.

12. Stabilisatorkombination nach Anspruch 11, dadurch gekennzeichnet, daß sie zusätzlich 4–100 Gewichtsteile wenigstens eines Partialesters aus Fettsäuren mit 8 bis 22 Kohlenstoffatomen und Polyolen mit 2 bis 6 Kohlenstoffatomen und 2 bis 6 Hydroxylgruppen enthalten, die pro Molekül im Durchschnitt mindestens eine freie Polyol-Hydroxyl-Gruppe aufweisen.

13. Stabilisatorkombination nach Ansprüchen 11 und 12, dadurch gekennzeichnet, daß sie zusätzlich 1–300 Gewichtsteile epoxidiertes Sojaöl enthalten.

14. Stabilisatorkombination nach Ansprüchen 11 bis 13, dadurch gekennzeichnet, daß sie zusätzlich 1 bis 20 Gewichtsteile sterisch gehinderter Phenole aufweisen.

15. Stabilisatorkombination nach Ansprüchen 11 bis 14, dadurch gekennzeichnet, daß sie als Komponente b wenigstens eine Diacyl-methanverbindung enthalten.

**Claims**

1. Stabilized polyvinyl chloride molding compounds containing a stabilizer combination based on alkali, alkaline earth and/or zinc soaps, costabilizers, finely divided, crystalline, water-containing alumosilicate, lubricants and, optionally, other standard additives, characterized in that it contains per 100 parts by weight polyvinyl chloride

a) as alumosilicate, from 0.2 to 5 parts by weight of a synthetic, crystalline finely divided sodium alumosilicate of the NaA type which contains from 13 to 25% by weight bound water and which, in its anhydrous form, has the composition 0.7 to 1.1 $Me_2O \cdot Al_2O_3 \cdot 1.3$ to 2.4 $SiO_2$ (where Me is sodium) and

b) as co-stabilizer, from 0.1 to 5 parts by weight of at least one co-stabilizer known per se from the class of β-diketones, optionally in addition to other co-stabilizers.

2. Stabilized PVC molding compounds as claimed in claim 1, characterized in that they contain the metal soaps in quantities of from 0.1 to 5 parts by weight per 100 parts by weight vinyl chloride, preferably in the form of the corresponding salts of higher saturated or unsaturated fatty acids.

3. Stabilized PVC molding compounds as claimed in claims 1 and 2, characterized in that they contain fatty acid soaps of calcium, zinc and/or barium, of which the barium may also be present as alkylphenolate.

4. Stabilized PVC molding compounds as claimed in claims 1 to 3, characterized in that they contain the finely divided, crystalline, water-containing alumosilicate in a particle size of from about 0.1 to 20 µm and preferably in a particle size of from about 1 to 10 µm.

5. Stabilized PVC molding compounds as claimed in claims 1 to 4, characterized in that they contain a sodium alumosilicate corresponding to the above general formula with a water content of from 18 to 25% by weight.

6. Stabilized PVC molding compounds as claimed in claims 1 to 5, characterized in that they contain as component b) a β-diketone corresponding to the general formula $R_1$–CO–$CHR_2$–CO–$R_3$, in which $R_1$ and $R_3$ may be the same or different and represent a linear or branched alkyl or alkenyl group containing up to 36 C atoms, an aralkyl group containing from 7 to 36 C atoms, an aryl group or cycloaliphatic group containing less than 14 C atoms; the cycloaliphatic groups may optionally be olefinically unsaturated, in addition to which the substituents $R_1$ and $R_3$ mentioned may also be substituted; $R_2$ represents hydrogen, an alkyl or alkenyl radical containing up to 36 C atoms and the substituents $R_1$ and $R_2$ may also be closed to form a ring.

7. Stabilized PVC molding compounds as claimed in claims 1 to 6, characterized in that they are free from co-stabilizers containing organic thio compounds.

8. Stabilized PVC molding compounds as claimed in claims 1 to 7, characterized in that they contain component b together with 0.1 to 5 parts by weight epoxidized soybean oil per 100 parts by weight polyvinyl chloride.

9. Stabilized PVC molding compounds as claimed in claims 1 to 8, characterized in that they contain as co-stabilizer with lubricant properties from 0.2 to 2.0 parts by weight partial esters of fatty acids containing 8 to 22 C atoms and polyols containing 2 to 6 C atoms and 2 to 6 hydroxyl groups which contain on average at least one free polyol hydroxyl group per molecule and/or in that an ester wax of preferably monohydric, relatively long-chain acids and corresponding alcohols containing in all 28 to 70 C atoms and preferably from 30 to 50 C atoms is present as lubricant.

10. Stabilized PVC molding compounds as claimed in claims 1 to 9, characterized in that they contain diacylmethane compounds as component b.

11. A stabilizer combination for polyvinyl chloride molding compounds having the following composition

a) 4 to 100 parts by weight of synthetic, crystalline finely divided sodium alumosilicate of the NaA type which contains from 13 to 25% by weight bound water and which, in its anhydrous form, has the composition 0.7 to 1.1 $Na_2O \cdot Al_2O_3 \cdot 1.3\text{–}2.4\ SiO_2$,

b) 1 to 50 parts by weight of at least one co-stabilizer known per se from the class of β-diketones,

c) 1 to 150 parts by weight calcium soaps,

d) 1 to 100 parts by weight zinc soaps.

12. A stabilizer combination as claimed in claim 11, characterized in that it additionally contains from 4 to 100 parts by weight of at least one partial ester of fatty acids containing 8 to 22 C atoms and polyols containing 2 to 6 carbon atoms and 2 to 6 hydroxyl groups which contain on average at least one free polyol hydroxyl group per molecule.

13. A stabilizer combination as claimed in claims 11 and 12, characterized in that it additionally contains from 1 to 300 parts by weight epoxidized soybean oil.

14. A stabilizer combination as claimed in claims 11 to 13, characterized in that it additionally contains from 1 to 20 parts by weight sterically hindered phenols.

15. A stabilizer combination as claimed in claims 11 to 14, characterized in that it contains at least one diacylmethane compound as component b.

## Revendications

1. Masses moulées stabilisées en chlorure de polyvinyle contenant une combinaison de stabilisants à base de savons de métaux alcalins, alcalino-terreux et/ou zinciques, des co-stabilisants, de l'aluminosilicate en fines particules, cristallin, hydraté, un agent de glissement ainsi que si désiré d'autres additifs usuels, caractérisées en ce qu'elles contiennent – rapporté à 100 parties en poids de chlorure de polyvinyle:

a) comme aluminosilicate, 0,2 à 5 parties en poids d'un aluminosilicate de sodium synthétique, cristallin, contenant de 13 à 25% en poids d'eau liée, en fines particules, du type Na A de composition – déterminée sous la forme anhydre: 0,7 à 1,1 $Me_2O$–$Al_2O_3$–1,3 à 2,4 $SiO_2$ (dans laquelle Me représente du sodium) et

b) comme co-stabilisant 0,1 à 5 parties en poids d'au moins un co-stabilisant connu en soi choisi dans la classe des β-dicétones, le cas échéant à côté de co-stabilisants supplémentaires.

2. Masses moulées stabilisées de PVC selon la revendication 1, caractérisées en ce qu'elles renferment les savons métalliques en quantité de 0,1 à 5 parties en poids pour 100 parties en poids de chlorure de polyvinyle, pour lesquels de préférence les sels correspondants d'acides gras de poids moléculaire plus élevé, saturés ou insaturés sont présents.

3. Masses coulées stabilisées en PVC selon la revendication 1 et 2, caractérisées en ce qu'elles renferment des savons d'acides gras de calcium, du zinc et/ou du baryum, pour lesquelles le baryum peut être présent également sous forme d'alcoylphénolate.

4. Masses moulées stabilisées en PVC selon les revendications 1 à 3, caractérisées en ce qu'elles

renferment l'aluminosilicate en fines particules, cristallin, hydraté dans une taille de particules de 0,1 à 20 µm, de préférence dans une taille de particules d'environ 1 à 10 µm.

5. Masses moulées stabilisées de PVC selon les revendications 1 à 4, caractérisées en ce qu'elles renferment un aluminosilicate de sodium de formule générale indiquée ayant une teneur en eau de 18 à 25% en poids.

6. Masses moulées stabilisées en PVC selon les revendications 1 à 5, caractérisées en ce qu'elles renferment comme composant b) une β-dicétone de formule générale:

$$R_1\text{–CO–CHR}_2\text{–CO–}R_3$$

dans laquelle $R_1$ et $R_3$ peuvent être identiques ou différents et respectivement représentent un alcoyle ou un alcényle en chaîne droite ou ramifiée ayant jusqu'à 36 atomes de carbone, un radical aralcoyle ayant de 7 à 36 atomes de carbone, un radical ou cycloalcoyle ayant moins de 14 atomes de carbone, pour lesquels les radicaux cycloalcoyle peuvent être éventuellement insaturés du type oléfinique et pour lesquels en outre les radicaux $R_1$ et $R_3$ mentionnés peuvent être également substitués alors que $R_2$ est un hydrogène, un radical alcoyle ou alcényle ayant jusqu'à 36 atomes de carbone et pour lesquels en outre les radicaux $R_1$ et $R_2$ également peuvent être fermés en un cycle.

7. Formes moulées stabilisées en PVC selon les revendications 1 à 6, caractérisées en ce qu'elles sont dépourvues de co-stabilisants contenant des dérivés thio-organiques.

8. Formes moulées stabilisées en PVC selon les revendications 1 à 7, caractérisées en ce qu'elles renferment les composants b) conjointement avec 0,1 à 5 parties en poids d'huile de soja époxydée, rapporté à 100 parties en poids de chlorure de polyvinyle.

9. Masses moulées stabilisées en PVC selon les revendications 1 à 8, caractérisées en ce qu'elles renferment comme co-stabilisant ayant des propriétés d'agent de glissement 0,2 à 2,0 parties en poids d'ester partiel d'acide gras ayant de 8 à 22 atomes de carbone et de polyols ayant de 2 à 6 atomes de carbone et de 2 à 6 groupes hydroxyle, qui possèdent en moyenne au moins un groupe hydroxyle du polyol libre par molécule, et/ou qu'une cire estérifiée de préférence un acide à chaîne plus longue univalent et d'un alcool correspondant ayant au total 28 à 70 atomes de carbone, de préférence 30 à 50 atomes de carbone.

10. Masses moulées stabilisées en PVC selon les revendications 1 à 9, caractérisées en ce qu'elles contiennent comme composant b) des dérivés du diacylméthane.

11. Combinaison de stabilisants pour les masses moulées en chlorure de polyvinyle ayant la composition:

a) 4–100 parties en poids d'un aluminosilicate de sodium synthétique, cristallin, contenant de 13 à 25% d'eau liée en fines particules, du type Na A qui rapporté à la forme anhydre, a la composition 0,7 à 1,1 $Na_2O$–$Al_2O_3$–1,3 à 2,4 $SiO_2$.

b) 1–50 parties en poids d'au moins un co-stabilisant connu en soi de la classe des β-dicétones,

c) 1 à 150 parties en poids de savons calciques,

d) 1 à 100 parties en poids de savons zinciques.

12. Combinaisons de stabilisants selon la revendication 11, caractérisées en ce qu'elles renferment en addition, 4 à 100 parties en poids d'au moins un ester partiel d'acide gras ayant de 8 à 22 atomes de carbone et de polyols ayant de 2 à 6 atomes de carbone et de 2 à 6 groupes hydroxyle qui possèdent en moyenne au moins un groupe hydroxyle du polyol libre par molécule.

13. Combinaisons de stabilisants selon les revendications 11 et 12, caractérisées en ce qu'elles contiennent en addition de 1 à 300 parties en poids d'huile de soja époxydée.

14. Combinaisons de stabilisants selon les revendications 11 à 13, caractérisées en ce qu'elles possèdent en supplément 1 à 20 parties en poids de phénols empêchés stériquement.

15. Combinaisons de stabilisants selon les revendications 11 à 14, caractérisées en ce qu'elles contiennent comme composant b) au moins un dérivé du diacylméthane.